(19) Europäisches Patentamt
European Patent Office
Office européen des brevets

(11) EP 4 589 302 A1

(12) **EUROPEAN PATENT APPLICATION**

(43) Date of publication:
**23.07.2025 Bulletin 2025/30**

(21) Application number: **25152063.1**

(22) Date of filing: **15.01.2025**

(51) International Patent Classification (IPC):
**G01P 13/02** (2006.01)    **G01P 21/02** (2006.01)
**G06N 3/02** (2006.01)

(52) Cooperative Patent Classification (CPC):
**G01P 13/025; G01P 21/025; G06N 3/02; G06N 3/045; G06N 3/08**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.01.2024 US 202418416660**

(71) Applicant: **Rockwell Collins, Inc.
Cedar Rapids, IA 52498 (US)**

(72) Inventors:
• **PEREZ ROCHA, Andres E.
Cunning, GA (US)**
• **HALL, Logan M.
Forest City, IA (US)**

(74) Representative: **Dehns
10 Old Bailey
London EC4M 7NG (GB)**

(54) **METHOD FOR DERIVATION OF SYNTHETIC AIR DATA BASED ON MACHINE LEARNING AND OPTIMAL STATE ESTIMATION**

(57)    An aircraft-based method for deriving synthetic air data (SyAD) independent of traditional pneumatic air data systems includes a first stage driven by machine learning (ML) algorithms trained throughout the aircraft's flight envelope and a second stage driven by an optimal state estimator incorporating non-linear Kalman filtering. The ML algorithms receive absolute and inertial parameter inputs (e.g., position, ground speed, attitude, angular rates, linear acceleration) sensed by absolute and inertial aircraft sensors and estimate a first-stage SyAD triplet (true airspeed, angle of attack, sideslip angle). The optimal state estimator blends the first-stage SyAD estimate with a subset of absolute and inertial parameter inputs to generate a refined blended SyAD triplet. The blended SyAD triplet output by the optimal state estimator refined estimates of the airspeed, angle of attack, and sideslip angle.

FIG. 1

**Description**

BACKGROUND

Flight control computers and/or flight management systems rely on redundant signals to maintain the availability and integrity of flight data. For example, traditional air data systems (ADS) use pneumatic sensors (e.g., pitot static probes) to measure true airspeed (TAS) and angle of attack (AoA) vanes to measure AoA and angle of sideslip (AoS), these three measurements otherwise known as the "air data triplet". TAS, for example, may be used to determine proximity to minimum operating speeds below which an aircraft may stall and maximum operating speeds above which the aircraft may be subject to extreme load damage. Similarly, angles of attack and sideslip may inform stall warning and stall protection systems, preventing the aircraft from entering an unrecoverable stall condition.

Malfunctioning air data systems may present hazardously misleading information (HMI) to the pilot and crew, leading to unintentional actions that may cause a loss of control or endanger crew and passengers. Accordingly, many aircraft may incorporate redundant air data systems, where two or three sets of independent sensors report and an air data set is chosen by voting, e.g., if two air data sets agree but not the third, one of the two air data sets in agreement (or an average of the two) may be chosen.

A common cause of air data system failure involves the accumulation of ice or other foreign objects or substances that may obstruct the pitot static probes. For example, Air France Flight 447 suffered inconsistencies in air speed measurements due to ice crystals blocking the pitot tubes, which led to disengagement of the autopilot system, which in turn caused the pilots to put the aircraft into an unrecoverable stall over the Atlantic Ocean. In such a scenario, if three redundant air data systems all disagree with each other, it may be difficult to know which system to trust. Synthetic air data (SyAD) systems may estimate the air data triplet based on sensors independent of traditional air data sensors. However, existing SyAD algorithms that are fully independent of traditional air data systems usually require a high-fidelity aircraft model to synthesize air data, which can be costly as well as platform dependent.

SUMMARY

In a first aspect, an aircraft-based method for estimating synthetic air data (SyAD) is disclosed. In embodiments, the method includes receiving, via a first stage of an aircraft-based synthetic air data (SyAD) system, absolute aircraft parameters (e.g., position, ground speed) sensed by an absolute position sensor (e.g., GPS, GNSS, or other satellite-based positioning sensor) aboard the aircraft. For example, the first stage includes machine learning (ML) algorithms trained across the flight envelope of the aircraft (e.g., based on real-time, recorded, and/or simulated flight data). The method includes receiving, via the first stage, inertial aircraft parameters (e.g., attitude, angular rate, linear acceleration) sensed by an inertial reference unit (IRU) of the aircraft. The method includes receiving, via the first stage, aircraft component or subsystem parameters sensed by components or systems/subsystems of the aircraft. The method includes estimating, via the first stage, an initial or first-stage SyAD set (true airspeed, angle of attack, sideslip angle) based on the received absolute, inertial, and aircraft component parameters. The method includes receiving, via a second stage of the SyAD system, a subset of the received absolute, inertial, and aircraft component parameters. For example, the second stage includes non-linear Kalman filtering including a stochastic wind model. The method includes receiving, via the second stage, the initial SyAD set from the first stage. The method includes estimating, via the second stage, a blended SyAD set by fusing the initial SyAD set with the received subset of absolute, inertial. and aircraft component parameters, the blended SyAD set including a refined airspeed, angle of attack, and sideslip angle.

In some embodiments, the non-linear Kalman filtering includes a stochastic wind model, and the refined blended SyAD set includes an estimated wind speed and direction local to the aircraft.

In some embodiments, the non-linear Kalman filtering includes a Particle Filter, Unscented Kalman Filter (UKF), and/or Extended Kalman Filter (EKF).

In some embodiments, angular rate data sensed by the IRU includes a three-axis angular rate (e.g., pitch rate, roll rate, yaw rate); sensed linear acceleration includes a three-axis linear acceleration, and sensed attitude includes a three-axis attitude estimation (e.g., roll angle, pitch angle, heading angle).

In some embodiments, sensed absolute position data includes a latitude, longitude, and altitude, and sensed ground speed data includes a three-axis ground speed and a ground track of the aircraft.

In some embodiments, the first stage includes artificial neural networks (ANN) trained to estimate the initial SyAD set.

In some embodiments, the sensed aircraft component parameters include aircraft engine data, aircraft control surface data, and/or aircraft mass data.

In some embodiments, aircraft engine data includes fuel burn rates, engine speeds, throttle lever positions, and/or engine pressure ratios.

In some embodiments, aircraft control surface data includes aileron positions, elevator positions, rudder positions, stabilizer positions, spoiler positions, flap positions, slat positions, and/or landing gear positions.

In some embodiments, aircraft mass data includes an aircraft weight and/or an aircraft center of gravity (CG).

In some embodiments, the method includes determining residual measurement errors of the SyAD system based on differences between the initial and blended SyAD sets. For example, when the residual errors meet or exceed threshold levels, the SyAD system generates an alert and invalidates one or both of the initial and blended SyAD sets (e.g., based on which SyAD sets deviate from sensed and validated air data).

In some embodiments, the method includes determining, via a measurement covariance matrix, a suitability of the first stage with respect to the flight envelope on which it was trained (e.g., whether the sensed aircraft parameters indicate a training deficient region of the flight envelope). The method includes adjusting the non-linear Kalman filtering of the second stage based on the determined suitability.

In some embodiments, the method includes forwarding the blended SyAD set to an avionics system of the aircraft (e.g., flight control, flight management, display) and/or a redundant air data system (ADS) of the aircraft.

In a further aspect, an aircraft-based synthetic air data (SyAD) system configured for execution on one or more processors is disclosed. For example, the SyAD system includes a first stage and a second stage. The first stage includes machine learning (ML) algorithms trained across the flight envelope of the aircraft. The first stage receives absolute and inertial aircraft parameters, the absolute parameters (e.g., position, ground speed) sensed by an absolute position sensor (e.g., GPS, GNSS, satellite-based positioning) and the inertial parameters (e.g., attitude, angular rate, linear acceleration) sensed by an inertial reference unit (IRU). The first stage also receives aircraft component parameters (e.g., engine data, control surface positions, aircraft mass data) sensed by systems/subsystems or components of the aircraft. The first stage estimates an initial or first-stage SyAD set (true airspeed, angle of attack, sideslip angle) based on the received absolute, inertial, and aircraft component parameters. The second stage of the SyAD system includes optimal state estimation via non-linear Kalman filtering. The second stage receives a subset of the absolute, inertial, and aircraft component parameters as well as the initial SyAD set estimated by the first stage. The second stage estimates a blended SyAD set by fusing the initial SyAD set with the subset of received absolute, inertial, and aircraft component parameters, the blended SyAD set including a refined airspeed, angle of attack, and sideslip angle.

In some embodiments, the non-linear Kalman filtering includes a stochastic wind model, and the blended SyAD set includes an estimated wind speed and direction local to the aircraft.

In some embodiments, the non-linear Kalman filtering includes one or more of a Particle Filter, an Unscented Kalman Filter (UKF), or an Extended Kalman Filter (EKF).

In some embodiments, the first stage includes artificial neural networks (ANN) trained to estimate the initial SyAD set.

In some embodiments, the SyAD system determines residual measurement errors based on differences between the initial and blended SyAD sets. For example, when the residual errors meet or exceed threshold levels, the SyAD system generates an alert and invalidates one or more of the initial or blended SyAD sets.

In some embodiments, the second stage includes a measurement covariance matrix for determining the suitability of the first stage with respect to the flight envelope. For example, based on the determined suitability the SyAD system may adjust the non-linear Kalman filtering (e.g., when the received aircraft parameters indicate a training deficient region of the flight envelope).

In some embodiments, the SyAD system forwards the blended SyAD solution to an aircraft avionics system or a redundant air data system (ADS) of the aircraft.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:

FIG. 1 is a block diagram illustrating an aircraft-based synthetic air data (SyAD) system according to example embodiments of this disclosure; and

FIG. 2 is a block diagram illustrating the SyAD system of FIG. 1;

FIGS. 3A and 3B are diagrammatic illustrations of implementations of the SyAD system of FIG. 1;

and FIGS. 4A through 4D are process flow diagrams illustrating a method for derivation of synthetic air data (SyAD) via fusion of machine learning trained algorithms with optimal state estimation according to example embodiments of this disclosure.

## DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

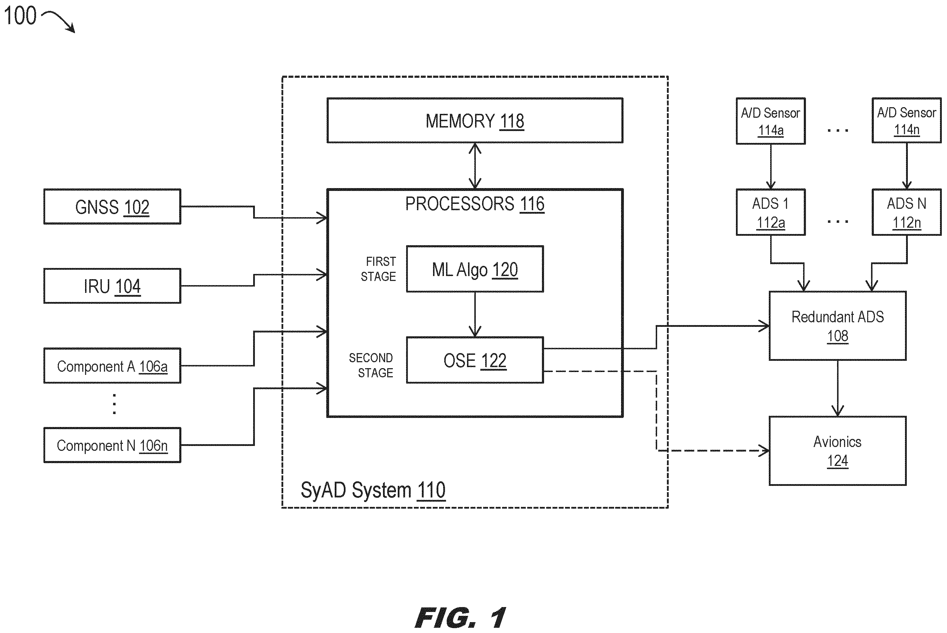

Referring now to FIG. 1, an aircraft 100 is shown. The aircraft 100 may include a global navigation satellite system (GNSS) receiver 102 compatible with a satellite-based navigation system; inertial reference unit (IRU) 104; aircraft subsystems 106a-106n; redundant air data system (ADS) 108; and synthetic air data (SyAD) system 110.

In embodiments, the redundant ADS 108 may include two, three, or more independent air data systems 112a-112n, each ADS connected to an independent set of air data sensors 114a-114n and estimating the air data triplet (true airspeed (TAS), angle of attack (AoA), angle of sideslip (AoS)) based on its air data sensors.

In embodiments, the SyAD system 110 may estimate air data independent of any air data sensors 114a-114n or other pneumatic sensors or vanes, instead using other readily available aircraft data and parameters. For example, the SyAD system 110 may be configured for execution on one or more processors 116 aboard the aircraft, and may include memory 118 or other like appropriate data storage, e.g., for accumulating additional training data inflight.

In embodiments, the SyAD system 110 may include two major components, a first stage and a second stage. For example, the first stage may include one or more machine learning (ML) algorithms 120 trained across the flight envelope of the aircraft 100, e.g., based on real-world, recorded, and/or simulated flight data. For example, the flight envelope for any given aircraft may calculate or plot capabilities and parameters specific to that aircraft, e.g., load factor, stall speed, top speed, maximum altitude, angle of attack ranges, and how the aircraft can be expected to perform (e.g., operational ranges) given various combinations of flight conditions. In some embodiments, the ML algorithms 120 may include an artificial neural network (ANN) or other appropriate neural network trained across the flight envelope.

In embodiments, the ML algorithms 120 may estimate an initial synthetic air data (SyAD) set (e.g., SyAD triplet) based on positional and/or operational parameters sensed aboard the aircraft 100. For example, the GNSS receiver 102 may provide absolute position and ground speed parameters of the aircraft 100 at a particular time of validity, e.g., latitude, longitude, altitude (e.g., ellipsoidal altitude), ground track, and/or ground speed. Similarly, the IRU 104 may provide inertial aircraft parameters at the time of validity, e.g., attitude data, angular rates, and linear acceleration of the aircraft 100 relative to a three-axis reference frame (e.g., north/east/down). In some embodiments, the ML algorithms 120 may additionally consider settings and parameters associated with aircraft components and subsystems 106a-106n, e.g., engine data, throttle settings, control surface positions, and/or aircraft mass factors.

In embodiments, the second stage of the SyAD system 110 may include an optimal state estimator 122. For example, the optimal state estimator 122 may fuse the initial estimated SyAD set with Newtonian dynamic modeling of the aircraft 100 via non-linear Kalman filtering or other similar optimal estimation techniques. Further, non-linear Kalman filtering by the optimal state estimator 122 may also incorporate a stochastic wind model, such that the ultimate output of the SyAD system 110 includes not only a refined blended SyAD set independent of traditional air data systems but also a vector estimate of local wind direction and speed. In embodiments, synthetic air data output by the SyAD system 110 may be forwarded to, and for use in conjunction with, traditional redundant air data systems 108 (ADS) and/or avionics systems 124 of the aircraft (e.g., flight management systems). For example, as described in greater detail below, the blended SyAD set estimated by the second stage may be forwarded to the redundant ADS 108 as, e.g., a standby or tiebreaker signal. Accordingly, air data signals thus selected by the redundant ADS 108 may be forwarded to avionics systems 124.

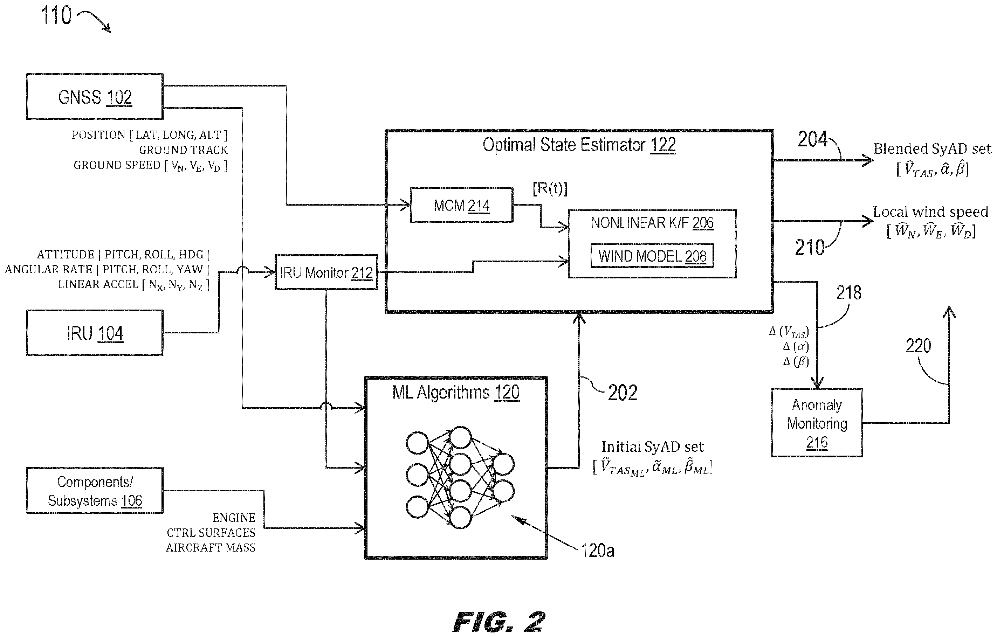

Referring now to FIG. 2, the SyAD system 110 is shown. As noted above, the SyAD system 110 may be two-stage, the ML algorithms 120 serving as a first stage and the optimal state estimator 122 as a second stage, in that the ML algorithms 120 may estimate an first-stage SyAD set 202 based on sensed parameters and inputs, and the optimal state estimator 122 may estimate a blended or refined SyAD set 204 by fusing the initial SyAD set with a subset of the absolute, inertial, and/or component parameters received by the ML algorithms via a non-linear Kalman filter 206. Further, the non-linear Kalman filter 206 may include a stochastic wind model 208 such that the blended SyAD set 204 may include an estimated local wind speed 210.

In embodiments, the SyAD system 110 may estimate a first-stage SyAD set 202 (e.g., a true airspeed/TAS, angle of attack/AoA, angle of sideslip/AoS) via the ML algorithms 120 trained across the flight envelope of the aircraft (100, FIG. 1), e.g., minimum and maximum operating speeds, minimum and maximum altitude, load factors. For example, the ML algorithms 120 may be trained on real time flight data, on recorded flight data, on simulated flight data, or via any combination thereof.

In embodiments, the ML algorithms 120 may receive absolute position parameters of the aircraft 100 (e.g., absolute position (latitude, longitude, altitude), ground speed, ground track) from the GNSS receiver 102. Further, the ML algorithms 120 may receive from the IRU 104 inertial parameters of the aircraft 100, e.g., three-axis linear accelerations ($N_X$, $N_Y$, $N_Z$); three-axis angular accelerations (roll rate, pitch rate, yaw rate); and three-axis attitude angles (roll, pitch, heading). In embodiments, the SyAD system 110 may include an IRU monitor 212 to ensure dissimilarity of input between the ML algorithms 120 and optimal state estimator with particular respect to inertial aircraft parameters received from the IRU 104. For example, optimally robust SyAD solutions may be achieved through dissimilarity of inputs between the ML algorithms 120 and optimal state estimator 122. In embodiments, the IRU monitor 202 may include a voter capable of providing dissimilar inertial aircraft parameters to the ML algorithms 120 and optimal state estimator 122 or, if faulty signals are received from the IRU 104, both stages may immediately recognize the faulty input and flag the resulting SyAD sets (e.g., first-stage set 202, blended set 204) as erroneous.

In embodiments, the ML algorithms 120 may receive aircraft component parameters from various aircraft components and/or subsystems 106. For example, aircraft component parameters may include, but are not limited to: aircraft engine data (e.g., engine speed, fuel burn rate, throttle lever positions and/or settings); aircraft control surface data (e.g., positions of ailerons, elevators, rudders, stabilizers, spoilers, flaps, slats, and/or landing gear); and/or aircraft mass data (e.g., aircraft weight, aircraft center of gravity (CG)).

In embodiments, based on the received absolute, inertial, and/or component parameters, the ML algorithms 120 may estimate the first-stage (e.g., initial) synthetic air data (SyAD) set 202, e.g., an initial estimated true airspeed $\tilde{V}_{TAS_{ML}}$, an initial estimated angle of attack $\tilde{\alpha}_{ML}$, and an initial estimated angle of sideslip $\tilde{\beta}_{ML}$. For example, the first-stage SyAD set 202 may be provided to the optimal state estimator 122 for further refinement.

In embodiments, the optimal state estimator 122 may include a non-linear Kalman filter 206 including a stochastic wind model 208 as noted above. For example, the non-linear Kalman filter 206 may include a Particle Filter, Unscented Kalman Filter, Extended Kalman Filter, or any like appropriate non-linear optimal estimation algorithm capable of blending Newtonian dynamic modeling with sensed parameter inputs. In embodiments, the optimal state estimator 122 may receive a subset of the absolute, inertial, and/or aircraft component parameters received by the ML algorithms 120 (e.g., all inputs or a subset of inputs, optimally dissimilar values).

In some embodiments, the optimal state estimator 122 may include a measurement covariance matrix 214 (MCM) adjustable as a function of different flight envelope parameters (e.g., altitude, pitch, roll, ground speed) in order to manage the overall contribution of the ML algorithms 120 to the blended air data set 204 estimated by the non-linear Kalman filter 206. For example, the ML algorithms 120 may be extensively trained on simulated, recorded, and/or real-world flight data, but there may be portions or regions of the flight envelope where the ML algorithms may be untrained, undertrained, or otherwise associated with known deficient performance (e.g., with respect to other regions of the flight envelope). In embodiments, if inputs received by the ML algorithms 120 are consistent with or indicative of such deficient regions of the flight envelope, the MCM 214 may be adjusted to assign a lower weight [R(t)] to the contribution of the first-stage SyAD set 202 on the final blended SyAD solution 204.

In embodiments, the non-linear Kalman filter 206 may, in blending the first-stage SyAD set 202 estimated by the ML algorithms 120 with parameter inputs (e.g., absolute, inertial, component), dynamically model the state of the aircraft 100 inflight while accounting for the effect of wind on the aircraft. For example, the non-linear Kalman filter 206 may model body frame acceleration and velocity of the aircraft 100 according to dynamic equations, including (but not limited to):

$$\begin{bmatrix} \dot{u} \\ \dot{v} \\ \dot{w} \end{bmatrix} = \begin{bmatrix} -qw + rv - g\,\sin\theta + Ax \\ -ru + pw + g\,\cos\theta\sin\varphi + Ay \\ -pv + qu + g\cos\theta\cos\varphi + Az \end{bmatrix} - R_i^b(\varphi, \theta, \psi) \begin{bmatrix} \dot{\mu}_n \\ \dot{\mu}_e \\ \dot{\mu}_d \end{bmatrix}$$

where $[\,u, v, w\,]$ are aircraft body frame velocities relative to the airmass, $[\,\phi, \theta, \psi\,]$ is the aircraft attitude vector, $[\,p, q, r\,]$ are the aircraft angular rates, $[\,\dot{\mu}_n, \dot{\mu}_e, \dot{\mu}_d\,]$ is the wind acceleration vector in the inertial reference frame (e.g., north, east, down), and $R_i^b(\varphi, \theta, \psi)$ is the directional cosine matrix for transformation of coordinates from the inertial frame to the aircraft body frame. An advantage of this particular dynamic model is that aerodynamic and propulsive forces need not be modeled separately, as they are accounted for by the measured body accelerations $[\,Ax, Ay, Az\,]$.

With respect to the stochastic wind model 208, a "wind triangle" may be associated with a kinematic relationship whereby

$$\vec{V_g} = \vec{V_a} + \vec{V_w}$$

or, whereby the aircraft groundspeed vector $\vec{V_g}$ is the sum of the airspeed and windspeed vectors $\vec{V_a}$, $\vec{V_w}$. This relationship may also be expressed:

$$\vec{V_g} = \begin{bmatrix} V_n \\ V_e \\ V_d \end{bmatrix} = R_b^i(\varphi, \theta, \psi) \begin{bmatrix} u \\ v \\ w \end{bmatrix} + \begin{bmatrix} \mu_n \\ \mu_e \\ \mu_d \end{bmatrix}$$

where $R_b^i(\varphi, \theta, \psi)$ is the directional cosine matrix for transformation of coordinates from the body frame to the inertial frame, and $[\,\mu_n, \mu_e, \mu_d\,]$ are wind velocities in the inertial frame.

In embodiments, the stochastic wind model 208 may model wind activity in time via Gauss-Markov, random-walk, or any other appropriate modelling system. For example, using a random-walk model:

$$\begin{bmatrix} \dot{\mu}_n \\ \dot{\mu}_e \\ \dot{\mu}_d \end{bmatrix} = \begin{bmatrix} W_{Rw_n} \\ W_{Rw_e} \\ W_{Rw_d} \end{bmatrix}$$

where $[W_{Rw_n}, W_{Rw_e}, W_{Rw_d}]$ are zero-mean Gaussian random variables.

In embodiments, based on the ground speed data, inertial pose data, and first-stage SyAD set 202, the optimal state estimator 122 may estimate the blended or refined SyAD set 204 $[\,\hat{V}_{TAS}, \hat{\alpha}, \hat{\beta}\,]$ (e.g., via fusion of neural network driven initial estimated air data with the non-linear Kalman filter 206 and stochastic wind model 208) including refined values for TAS, AoA, and AoS as well as a wind vector 210 $[\,\hat{W}_N, \hat{W}_E, \hat{W}_D\,]$ estimating wind speed local to the aircraft 100 in the inertial frame.

In embodiments, the SyAD system 110 may include an anomaly monitor 216. For example, the optimal state estimator 122 may compute measurement residuals 218, e.g., the differences ($\Delta$) between the first-stage SyAD set 202 estimated by the ML algorithms 120 and the blended SyAD set 204 refined by the Kalman filter 206. For example, sufficiently high measurement residuals 218 may be indicative of anomalous behavior within the SyAD system 110 (e.g., faulty input signals) causing the measurements provided to the Kalman filter 206 (e.g., the first-stage SyAD set 202) and the internal estimates by the Kalman filter (e.g., the blended SyAD set 204) to diverge. In embodiments, if measurement residuals 218 exceed a threshold level, the anomaly monitor 216 may generate an alert 220 and/or invalidate either or both of the initial and blended SyAD sets 202, 204.

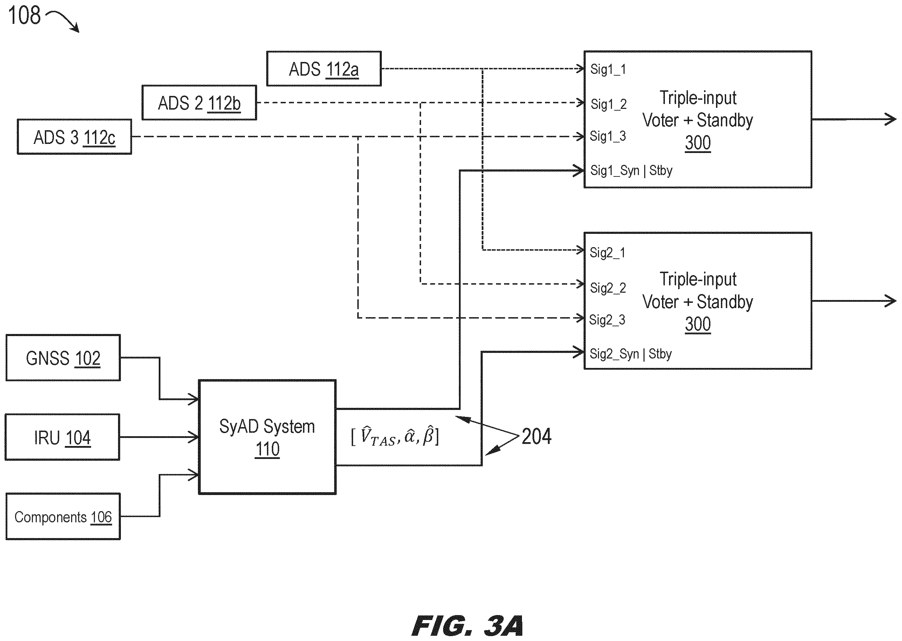

Referring to FIG. 3A, the redundant ADS system 108 is shown.

In embodiments, the redundant ADS system 108 may be a triple-redundant configuration wherein three independent traditional air data systems 112a-112c may each provide an air data set to an ADS monitor 300. For example, each ADS monitor 300 may receive an air data signal from each of the three air data systems 112a-112c, voting to select an air data set for use. If, for example, signals 1 and 2 (from ADS 112a, 112b) agree but signal 3 (from ADS 112c) does not, the outlying signal 3 may be outvoted and one of the majority air data sets selected for use. In some embodiments, the SyAD system 110 may provide the blended SyAD set 204 as an additional standby signal to add another layer of redundancy to the triple-redundant configuration.

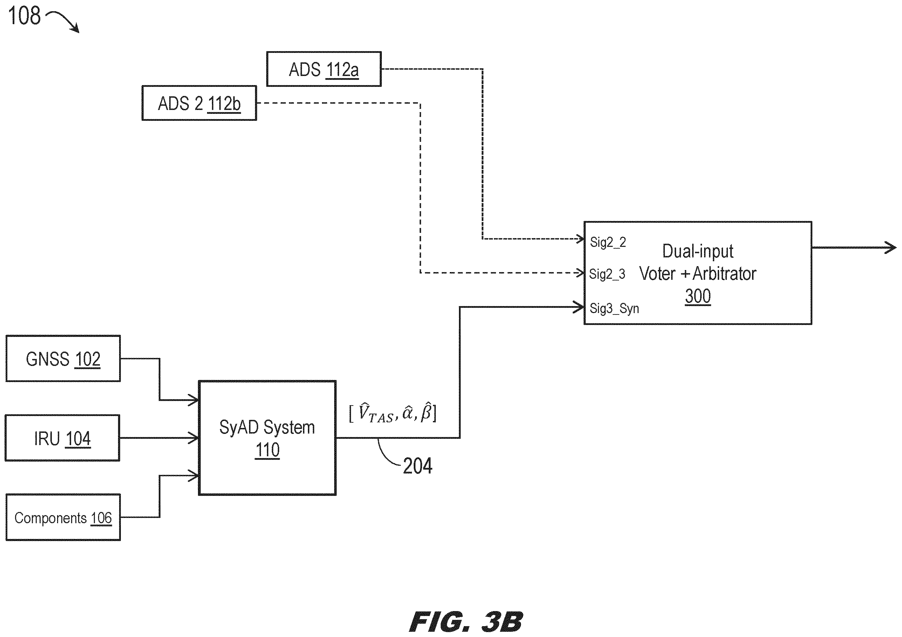

Referring also to FIG. 3B, the redundant ADS system 108 may instead be a dual-input voter configuration wherein the ADS monitor 300 receives two traditional air data sets from ADS 112a, 112b. In embodiments, the blended SyAD set 204 may also be provided to the ADS monitor 300 for fault detection or tiebreaking. For example, if the air data sets received from ADS 112a, 112b disagree, the ADS monitor 300 may refer to the blended SyAD set 204 and choose the air data set consistent with the blended SyAD set.

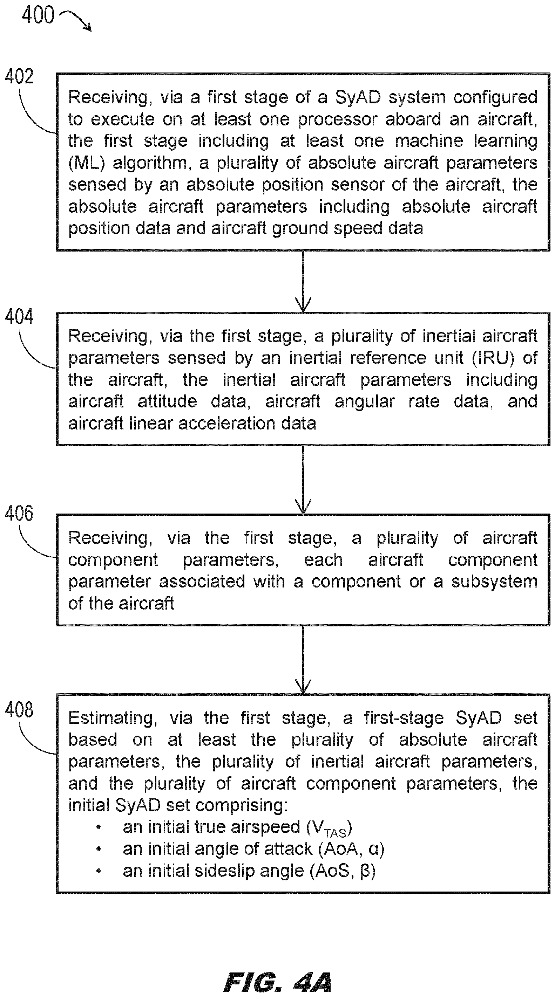

Referring now to FIG. 4A, the aircraft-based method 400 for estimating synthetic air data (SyAD) may be implemented by the SyAD system 110 and may include the following steps.

At a step 402, a first stage of the SyAD system, including machine learning (ML) algorithms within the SyAD system and trained throughout the flight envelope of the aircraft, receive absolute aircraft parameters sensed by a GNSS or like satellite-based receiver. For example, absolute aircraft parameters include aircraft position data (e.g., latitude, longitude, altitude) and aircraft ground speed data (e.g., three-axis ground speed (e.g., north, east, down), ground track). In some embodiments, the ML algorithms may include an artificial neural network (ANN).

At a step 404, the first stage receives inertial parameters sensed by an inertial reference unit (IRU) aboard the aircraft, e.g., aircraft angular rates (e.g., pitch/roll/yaw), aircraft linear acceleration (e.g., x/y/z, north/east/down) and aircraft attitude (e.g., pitch/roll/heading angles).

At a step 406, the first stage receives aircraft component parameters sensed by components or subsystems aboard the aircraft. For example, component parameters may include aircraft engine data (engine speed, throttle settings, fuel burn rate); control surface positions (e.g., for flaps, ailerons, elevators, stabilizers, rudders, spoilers, slats, and/or landing gear); and/or aircraft mass data (e.g., aircraft weight, aircraft center of gravity). In embodiments, the method may include estimating the initial SyAD set based on the received aircraft component parameters as well as the absolute and inertial aircraft parameters.

At a step 408, the first stage estimates a first-stage or initial SyAD set (true airspeed (TAS), angle of attack (AoA), angle of sideslip (AoS)) based on the absolute, inertial, and aircraft component parameters.

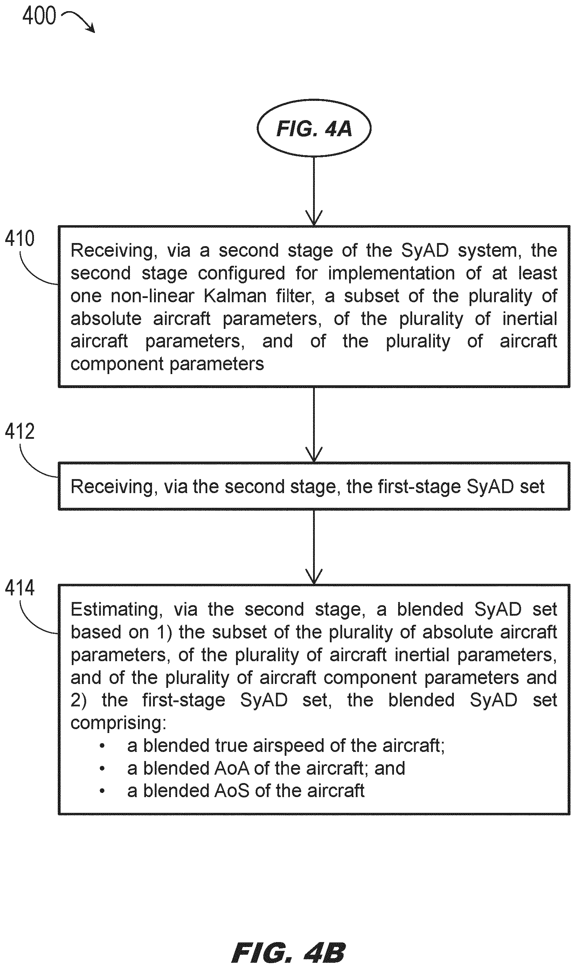

Referring also to FIG. 4B, at a step 410, a second stage of the SyAD system (including an optimal state estimator incorporating non-linear Kalman filtering) receives a subset of the absolute, inertial, and aircraft component parameters received by the first stage.

Referring also to FIG. 4B, at a step 412, the second stage receives the initial SyAD set estimated by the first stage.

At a step 414, the second stage estimates (e.g., via non-linear Kalman filtering) a blended SyAD set by fusing or blending the first-stage SyAD set with the received absolute, inertial. and aircraft component parameters. The blended SyAD set includes refined values for TAS, AoA, and AoS. In some embodiments, the non-linear Kalman filter incorporates a stochastic wind model, and the blended SyAD set includes a wind vector estimating local wind speed and direction (e.g., local to the aircraft).

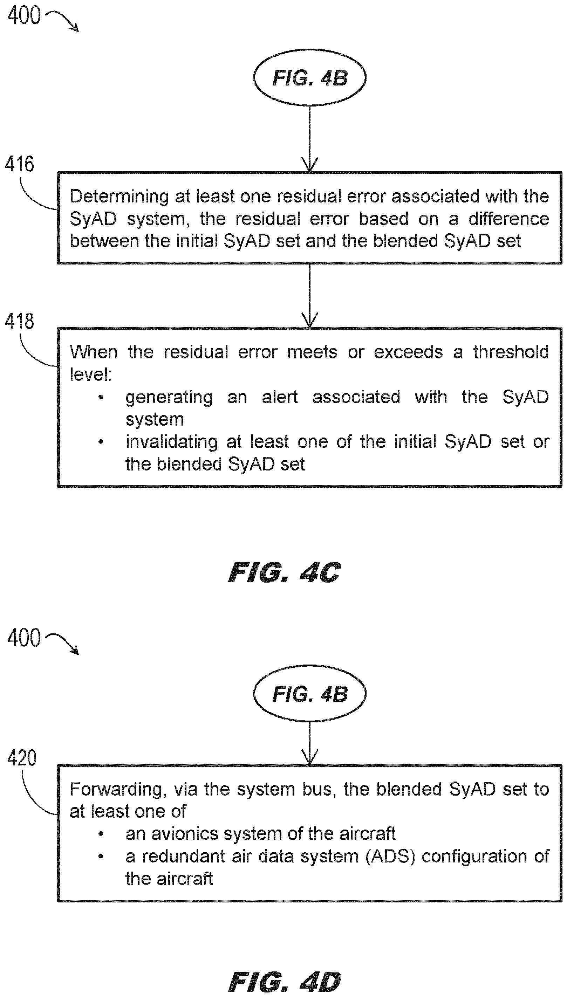

Referring also to FIG. 4C, the method 400 may include additional steps 416 and 418. At the step 416, a SyAD anomaly monitor measures residual errors tracked by the second stage based on differences in the first-stage SyAD set (as estimated by the first stage) and the blended SyAD set (as estimated by the non-linear Kalman filter).

At the step 418, when the residual errors sufficiently differ, e.g., at or beyond a threshold level, the anomaly monitor generates an alert indicative of anomalous activity within the SyAD system and invalidates either or both of the initial and blended SyAD sets as the product of said anomalous activity.

Referring also to FIG. 4D, the method 400 may include an additional step 420. At the step 420, the SyAD system forwards the blended SyAD set to a redundant ADS configuration, e.g., for use as a tiebreaker, fault detector, and/or standby signal. The ADS may in turn forward the selected set of signals to the flight control system, displays or other avionics systems within the aircraft 100.

CONCLUSION

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Although inventive concepts have been described with reference to the embodiments illustrated in the attached drawing figures, equivalents may be employed and substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

**Claims**

1. A method for estimating synthetic air data, comprising:

receiving, via a first stage of a synthetic air data, SyAD, system configured to execute on at least one processor aboard an aircraft, the first stage including at least one machine learning, ML, algorithm, a plurality of absolute aircraft parameters sensed by an absolute position sensor of the aircraft, the plurality of absolute aircraft parameters including absolute aircraft position data and aircraft ground speed data;

receiving, via the first stage, a plurality of inertial aircraft parameters sensed by an inertial reference unit, IRU, of the aircraft, the inertial aircraft parameters including aircraft attitude data, aircraft angular rate data, and aircraft linear acceleration data;

receiving, via the first stage, a plurality of aircraft component parameters, each aircraft component parameter associated with a component or a subsystem of the aircraft;

estimating, via the first stage, a first-stage synthetic air data, SyAD, set based on at least the plurality of absolute aircraft parameters, the plurality of aircraft inertial parameters, and the plurality of aircraft component parameters, the first-stage SyAD set comprising:

an initial true airspeed ($V_{TAS}$) of the aircraft;
an initial angle of attack (AoA, $\alpha$) of the aircraft;
and
an initial sideslip angle (AoS, $\beta$) of the aircraft;

receiving, via a second stage of the SyAD system, the second stage configured for implementation of at least one non-linear Kalman filter, a subset of the plurality of absolute aircraft parameters, of the plurality of inertial aircraft parameters, and of the plurality of aircraft component parameters;

receiving, via the second stage, the first-stage SyAD set;

estimating, via the second stage, a blended SyAD set based on 1) the subset of the plurality of absolute aircraft parameters, of the plurality of aircraft inertial parameters, and of the plurality of aircraft component parameters and 2) the first-stage SyAD set, the blended SyAD set comprising:

a blended true airspeed of the aircraft;
a blended AoA of the aircraft;
and
a blended AoS of the aircraft.

2. The method of Claim 1, wherein:

the at least one non-linear Kalman filter includes a stochastic wind model;
and
wherein the blended SyAD set includes an estimated wind speed local to the aircraft.

3. The method of Claim 1 or 2, wherein the at least one non-linear Kalman filter is selected from a group including a Particle Filter, an Unscented Kalman Filter, UKF, and an Extended Kalman Filter, EKF.

4. The method of Claim 1, 2 or 3, wherein:

the aircraft angular rate data includes a three-axis angular rate of the aircraft, comprising a pitch rate, a roll rate, and a yaw rate;
the aircraft linear acceleration data includes a three-axis linear acceleration of the aircraft;
and
the aircraft attitude data includes a three-axis attitude estimation of the aircraft comprising a roll angle, a pitch angle, and a heading angle.

5. The method of Claim 1, 2, 3 or 4, wherein:

the aircraft absolute position data includes a latitude, a longitude, and an altitude of the aircraft;
and
wherein the aircraft ground speed data includes a three-axis ground speed vector of the aircraft and a ground track of the aircraft.

6. The method of any preceding Claim, wherein the first stage includes at least one artificial neural network, ANN, configured for estimation of the first-stage SyAD set.

7. The method of any preceding Claim, wherein the plurality of aircraft component parameters includes at least one of:

aircraft engine data;
aircraft control surface data;
or
aircraft mass data.

8. The method of any preceding Claim, wherein the aircraft engine data includes at least one of:

a fuel burn rate associated with an engine of the aircraft;
an engine speed associated with an engine of the aircraft;
a throttle lever position;
and
a pressure ratio associated with an engine of the aircraft; and/or wherein the aircraft control surface data includes at least one of:

an aileron position;
an elevator position;
a rudder position;
a stabilizer position;
a spoiler position;
a flap position;
a slat position;
and

a gear position associated with landing gear of the aircraft; and/or wherein the aircraft mass data includes at least one of:

a weight of the aircraft;
or
a center of gravity, CG, of the aircraft.

9. The method of any preceding Claim, further comprising:

determining at least one residual error associated with the SyAD system, the residual error based on a difference between the first-stage SyAD set and the blended SyAD set;
and
when the residual error meets or exceeds a threshold level:

generating an alert associated with the SyAD system;
and
invalidating at least one of the first-stage SyAD set or the blended SyAD set.

10. The method of any preceding Claim, wherein estimating, via the second stage, a blended SyAD set includes:

determining, via a measurement covariance matrix of the second stage, a suitability of the first stage with respect to a flight envelope of the aircraft based on one or more of the plurality of absolute aircraft parameters, the plurality of inertial aircraft parameters, or the plurality of aircraft component parameters;
and
adjusting the at least one non-linear Kalman filter based on the determined suitability.

11. The method of any preceding Claim, further comprising:
forwarding the blended SyAD set to at least one of:

an avionics system of the aircraft;
or
a redundant air data system, ADS, configuration of the aircraft.

12. An aircraft-based synthetic air data, SyAD, system (110), comprising:

one or more processors (116);
non-transitory computer-readable memory (118) encoded with instructions which, when executed by the one or more processors, cause the SyAD system to:

receive a plurality of absolute aircraft parameters sensed by at least one absolute position sensor of an aircraft, the plurality of absolute aircraft parameters including absolute position data and ground speed data of the aircraft;
receive a plurality of inertial aircraft parameters from at least one inertial reference unit, IRU, (104) of the aircraft, the plurality of inertial aircraft parameters including aircraft attitude data, aircraft angular rate data, and aircraft linear acceleration data;
receive a plurality of aircraft component parameters from at least one of a component or a subsystem of the aircraft, the plurality of aircraft component parameters including at least one of aircraft engine data, aircraft control surface data or aircraft mass data;
estimate, via a first stage comprising at least one machine learning, ML, algorithm (120) trained according to a flight envelope of the aircraft, a first-stage SyAD set based on the plurality of absolute aircraft parameters, the plurality of inertial aircraft parameters, and the plurality of aircraft component parameters, the first-stage SyAD set comprising:

an initial true airspeed ($V_{TAS}$) of the aircraft;
an initial angle of attack (AoA, $\alpha$) of the aircraft;
and
an initial sideslip angle (AoS, $\beta$) of the aircraft;
receive, via a second stage configured for implementation of at least one non-linear Kalman filter, the estimated first-stage SyAD set;
estimate, via the second stage, a blended SyAD set based on the first-stage SyAD set and a subset of the plurality of absolute aircraft parameters, the plurality of inertial aircraft parameters, and the plurality of aircraft component parameters, the blended SyAD set comprising:

a blended true airspeed of the aircraft;
a blended AoA of the aircraft;
and
a blended AoS of the aircraft.

13. The aircraft-based SyAD system of Claim 12, wherein:
the at least one non-linear Kalman filter includes a stochastic wind model; and
the blended SyAD set includes an estimated wind speed local to the aircraft; and/or wherein the at least one non-linear Kalman filter is selected from a group including a Particle Filter, an Unscented Kalman Filter, UKF, and an Extended Kalman Filter, EKF; and/or wherein the at least one ML algorithm includes at least one artificial neural network, ANN, trained according to a flight envelope of the aircraft.

14. The aircraft-based SyAD system of Claim 12 or 13, wherein the encoded instructions further cause the SyAD system (110) to:

determine at least one residual error associated with the SyAD system, the residual error based on a difference between the first-stage SyAD set and the blended SyAD set;
and
when the residual error meets or exceeds a threshold level:

generating an alert associated with the SyAD system;
and
invalidating at least one of the first-stage SyAD set or the blended SyAD set.

15. The aircraft-based SyAD system of Claim 12, 13 or 14, wherein the encoded instructions further cause the SyAD system (110) to:

determine, via a measurement covariance matrix of the second stage, a suitability of the first stage with respect to the flight envelope based on one or more of the plurality of absolute aircraft parameters, the plurality of inertial aircraft parameters, or the plurality of aircraft component parameters; and

adjust the at least one non-linear Kalman filter based on the determined suitability; and/or wherein the encoded instructions further cause the SyAD system to forward the blended SyAD set to at least one of a flight control system of the aircraft or a redundant air data system, ADS, (108) configuration of the aircraft.

*FIG. 1*

EP 4 589 302 A1

FIG. 2

**FIG. 3A**

EP 4 589 302 A1

**FIG. 3B**

EP 4 589 302 A1

400

402
Receiving, via a first stage of a SyAD system configured to execute on at least one processor aboard an aircraft, the first stage including at least one machine learning (ML) algorithm, a plurality of absolute aircraft parameters sensed by an absolute position sensor of the aircraft, the absolute aircraft parameters including absolute aircraft position data and aircraft ground speed data

404
Receiving, via the first stage, a plurality of inertial aircraft parameters sensed by an inertial reference unit (IRU) of the aircraft, the inertial aircraft parameters including aircraft attitude data, aircraft angular rate data, and aircraft linear acceleration data

406
Receiving, via the first stage, a plurality of aircraft component parameters, each aircraft component parameter associated with a component or a subsystem of the aircraft

408
Estimating, via the first stage, a first-stage SyAD set based on at least the plurality of absolute aircraft parameters, the plurality of inertial aircraft parameters, and the plurality of aircraft component parameters, the initial SyAD set comprising:
- an initial true airspeed ($V_{TAS}$)
- an initial angle of attack (AoA, $\alpha$)
- an initial sideslip angle (AoS, $\beta$)

*FIG. 4A*

400

FIG. 4A

410
Receiving, via a second stage of the SyAD system, the second stage configured for implementation of at least one non-linear Kalman filter, a subset of the plurality of absolute aircraft parameters, of the plurality of inertial aircraft parameters, and of the plurality of aircraft component parameters

412
Receiving, via the second stage, the first-stage SyAD set

414
Estimating, via the second stage, a blended SyAD set based on 1) the subset of the plurality of absolute aircraft parameters, of the plurality of aircraft inertial parameters, and of the plurality of aircraft component parameters and 2) the first-stage SyAD set, the blended SyAD set comprising:
- a blended true airspeed of the aircraft;
- a blended AoA of the aircraft; and
- a blended AoS of the aircraft

FIG. 4B

400

FIG. 4B

416 Determining at least one residual error associated with the SyAD system, the residual error based on a difference between the initial SyAD set and the blended SyAD set

418 When the residual error meets or exceeds a threshold level:
- generating an alert associated with the SyAD system
- invalidating at least one of the initial SyAD set or the blended SyAD set

FIG. 4C

400

FIG. 4B

420 Forwarding, via the system bus, the blended SyAD set to at least one of
- an avionics system of the aircraft
- a redundant air data system (ADS) configuration of the aircraft

FIG. 4D

Europäisches
Patentamt

European
Patent Office

Office européen
des brevets

**EUROPEAN SEARCH REPORT**

Application Number

EP 25 15 2063

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/309810 A1 (CARVALHO BRUNO JAVIEL [BR] ET AL) 1 October 2020 (2020-10-01) | 1,3-9, 11-14 | INV.<br>G01P13/02 |
| Y | * paragraphs [0004], [0020] - [0027], | 2 | G01P21/02 |
| A | [0034], [0052]; claims 7, 15, 16; figures 1-3 * | 10,15 | G06N3/02 |
| Y | WENZ ANDREAS ET AL: "Moving Horizon Estimation of Air Data Parameters for UAVs", IEEE TRANSACTIONS ON AEROSPACE AND ELECTRONIC SYSTEMS, IEEE SERVICE CENTER, PISCATAWAY, NJ, US, vol. 56, no. 3, 10 October 2019 (2019-10-10), pages 2101-2121, XP011792554, ISSN: 0018-9251, DOI: 10.1109/TAES.2019.2946677 [retrieved on 2020-06-08] | 2 | |
| A | * abstract; section II.A; figure 2 * | 10,15 | |
| A | SEREN C ET AL: "Adaptive Extended Kalman Filtering for virtual sensing of longitudinal flight parameters", 2013 CONFERENCE ON CONTROL AND FAULT-TOLERANT SYSTEMS (SYSTOL), IEEE, 9 October 2013 (2013-10-09), pages 25-30, XP032545776, DOI: 10.1109/SYSTOL.2013.6693859 [retrieved on 2013-12-24] * the whole document * | 1,10,12, 15 | TECHNICAL FIELDS SEARCHED (IPC)<br><br>G01P<br>G06N |
| A | CN 117 251 942 A (CHENGDU CAIC ELECTRONICS CO LTD) 19 December 2023 (2023-12-19) * the whole document * | 1-15 | |

The present search report has been drawn up for all claims

| Place of search | Date of completion of the search | Examiner |
|---|---|---|
| Munich | 28 May 2025 | Schwarz, Cornelia |

EPO FORM 1503 03.82 (P04C01)

## ANNEX TO THE EUROPEAN SEARCH REPORT
## ON EUROPEAN PATENT APPLICATION NO.

EP 25 15 2063

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2025

| Patent document cited in search report | Publication date | Patent family member(s) | | Publication date |
|---|---|---|---|---|
| US 2020309810 A1 | 01-10-2020 | CN | 111433612 A | 17-07-2020 |
| | | US | 2020309810 A1 | 01-10-2020 |
| | | WO | 2019071327 A1 | 18-04-2019 |
| CN 117251942 A | 19-12-2023 | CN | 117251942 A | 19-12-2023 |
| | | WO | 2025102741 A1 | 22-05-2025 |

EPO FORM P0459

For more details about this annex : see Official Journal of the European Patent Office, No. 12/82